Europäisches Patentamt

European Patent Office

Office européen des brevets

Publication number: **0 289 966**
**A2**

## EUROPEAN PATENT APPLICATION

Application number: 88106962.9

Date of filing: 30.04.88

Int. Cl.⁴ **F16F 15/22 , F16C 3/20 , F16F 15/32**

Priority: 06.05.87 US 47838

Date of publication of application:
**09.11.88 Bulletin 88/45**

Designated Contracting States:
**BE DE ES FR GB IT SE**

Applicant: **DEERE & COMPANY**
**1 John Deere Road**
**Moline Illinois 61265(US)**

Inventor: **Cherry, Jack Douglas**
**906-13th Street**
**Grundy Center Iowa 50638(US)**
Inventor: **Trumbauer, David Vernon**
**701 Washington Street**
**Denver Iowa 50622(US)**
Inventor: **Hastings, Steven L.**
**812 Loretta Avenue**
**Waterloo Iowa 50702(US)**

Representative: **Collins, Geoffrey Stainton et al**
**c/o Reddie & Grose 16 Theobalds Road**
**London WC1X 8PL(GB)**

(54) **A process for balancing a crankshaft, and a crankshaft balanced thereby.**

(57) A crankshaft having counterweights (12) is balanced by adding additional weight to the latter without modifying their outer dimensions. Bores (14) are drilled into the counterweights (12) and then a slug (16) of material which is of a different density than the original counterweight material is inserted into the drilled bore (14). The bore (14) is drilled oversize so that the slug (16) can be accomodated entirely within it, and the slug (16) is disposed at such a position within the bore (14) that substantial balance is achieved without the need for any further step. The slug (16) may be held in place by any suitable means, e.g., press-fitting, upset fitting, welding or threading. With threading it is particularly easy to screw the slug (16) into the bore (14) so that it is positioned highly accurately for the appropriate balance.

*FIG. 1*

*FIG. 3*

## A process for balancing a crankshaft, and a crankshaft balanced thereby.

This invention relates to a process of balancing a crankshaft which has balancing members comprising selectively removing a portion of at least one of the balancing members thereby forming an aperture therein, and securing balance material of a density different from the balancing members in the aperture. It also relates to the resultant crankshaft.

The typical crankshaft of an internal combustion engine has multiple offset portions which are driven by the piston rods of the engine. To minimize vibration which can cause damage, the crankshaft normally is provided with counterweights which counterbalance the offset portions of the crankshaft.

It is not economically feasible to manufacture the crankshaft and counterweights so that they are totally balanced from the start. Instead, the crankshaft and counterweights normally are manufactured so that they are approximately balanced and then "fine tuned" to bring them into an optimum final static and dynamic balance. This usually is accomplished by selectively removing parts of the counterweights, e.g., by drilling holes in them. US-A-2,997,882 discloses a machine for such balancing.

It has been known for some time that counterweights or other vibration dampers of engines could at least theoretically be balanced by adding weight to them, much as a slug is added to balance a vehicle wheel. See the said US-A-2,997,882 and also US-A-3,222,953. However, as US-A-2,997,882 notes, it is easier to drill out excess material to obtain a precise final balance than to add material. Thus, even where additional material is added, final balancing has still generally been done by drilling. See US-A-3,748,925. Only recently has it been suggested that it may sometimes be desirable to balance the crankshaft solely by adding weight to the outside of the crankshaft. See US-A-4,445, 399.

In modern engines, the clearance tolerances around the crankshaft are quite tight. Thus, there simply is generally no room to add additional material to the outside of the crankshaft, counterweights or other balancing members.

In preparing racing engines it is sometimes the practice initially to drill a bore in the crankshaft and then over-fill this aperture with a denser balance material, e.g. lead. Again the final balancing is effected by appropriate trimming of excess lead. Thus three steps are required.

The present invention enables a crankshaft to be balanced by adding weight at selected locations without altering the dimensions of the crankshaft, counterweights, or other balancing members and usually without the need to remove material to achieve final balance.

According to the present invention the aperture is large enough entirely to accomodate the balance material within it and the material is disposed at such a position within the aperture as to effect substantial balance of the crankshaft.

Thus the balance is achieved by positioning the balance material appropriately within the aperture without the material extending beyound the aperture, and usually no removal of material will be needed except perhaps for exceedingly fine balance requirements required for special applications of the crankshaft.

It is preferred that the aperture is a drilled bore which is tapped to provide it with threads, and that the balance material is in the form of a slug with corresponding threads which can be screwed into the bore and its position easily adjusted with precision by turning the slug with a screwdriver.

Embodiments of the invention will now be described with reference to the accompanying diagrammatic drawings in which:

Fig. 1 depicts a crankshaft and counterweights having a plurality of bores therein; and

Figs. 2 to 4 are cross-sectional views along the line 2-2 in Fig. 1 of various embodiments of slugs inserted in the said bores.

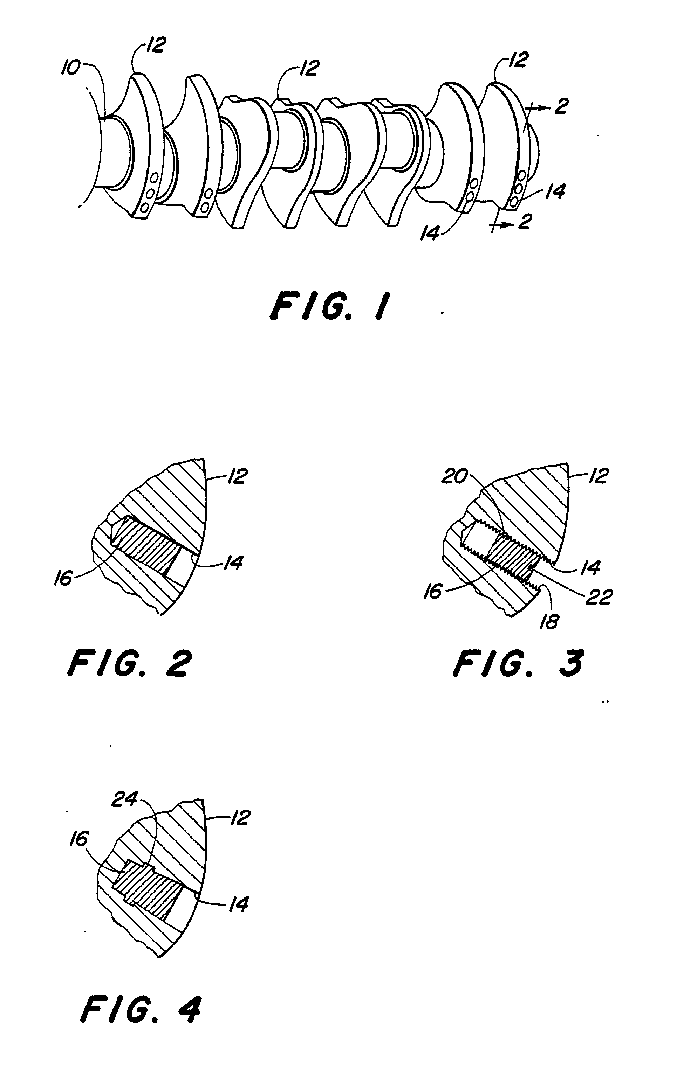

Fig. 1 generally depicts a crankshaft 10 having a plurality of balancing members in the form of counterweights 12 thereon. Bores 14 have been formed in each counterweight as needed to balance the counterweight.

Referring to Fig. 2, a slug 16 of a density different from the counterweights 12 is shown inserted in the bore 14, e.g., by press fitting. The slug 16 can be either denser or less dense than the original material of the counterweights 12. If the counterweights 12 are made out of the conventional nodular iron, suitable denser materials would include tungsten, gold, platinum, lead and various lead alloys, e.g., lead alloyed with bismuth, tin or nickel. Aluminium and various aluminium alloys would be suitable for use as materials less dense than nodular iron. while these materials are suggested as examples, they are in no way intended to be all-inclusive and any suitable material having a different density from the counterweights could be used.

In an alternative embodiment shown in Fig. 3, after the bore 14 has been drilled, it is tapped to provide threads 18 on the inner surface thereof. Slug 16 then preferably also is threaded on its outer surface with threads 20 corresponding to threads 18. and preferably is provided with a screwdriver slot 22. Slug 16 is shorter than bore 14 and its position along bore 14 can be adjusted by screwing the slug 16 into or out of the bore 14.

In further embodiments, the bore 14 may be provided with a radially extending slot 24 near its innermost end, as shown in Fig. 4, or simply may be radially larger at its innermost than at its outermost end. In either situation, the slug can be held in place by upset-fitting the slug 16 into the bore 14, that is by pressing the slug 16 into the bore 14 with sufficient force that it deforms to fill the innermost portion of the bore 14. This technique also could be used with the threaded bore illustrated in Fig. 3.

The slugs are shorter than the associated bore, and are disposed at such a position in the bore as to effect substantial balance of the crankshaft. Generally no final step of removing material from the slug is necessary except perhaps in the case of special applications where exceptionally fine balance is imperative.

The procedure to determine the location of the bores can be conducted in the usual fashion, e.g., by hand or as taught by the references cited above, the only additional factor being to take into consideration the added mass of the slug when determining the balance points. For example, the bores and slugs can be provided in balancing members other than the counterweights, e.g., vibration damping members. The slugs also might be fitted into the bores and welded into place.

## Claims

1. A process of balancing a crankshaft (10) which has balancing members (12) comprising selectively removing a portion of at least one of the balancing members (12) thereby forming an aperture (14) therein, and securing balance material (16) of a density different from the balancing members (12) in the aperture (14) characterised in that the aperture (14) is large enough entirely to accommodate the balance material (16) within it and the material (16) is disposed at such a position within the aperture (14) as to effect substantial balance of the crankshaft (10).

2. A process according to claim 1 characterised in that the aperture is a bore (18).

3. A process according to claim 2 characterised in that the bore (18) is threaded.

4. A process according to claim 3 characterised in that the balance material comprises a slug (16) threaded to engage the threaded bore (18).

5. A process according to claim 2 or 3 characterised in that the balance material is press-fitted into engagement with the bore (18).

6. A process according to claim 2 characterised in that at least a part (24) of the inner end portion of the bore (18) is larger than the outer end portion and the balance material (16) is upset-fitted into it.

7. A process according to any preceding claim characterised in that the balance material (16) is denser than the material of the balancing members (12).

8. A process according to claim 7 characterised in that the balancing members (12) are of nodular iron and the balance material (16) is selected from the group consisting of lead, lead alloys, tungsten, gold and platinum.

9. A process according to claim 8 characterised in that the balance material (16) is lead alloyed with bismuth, tin or nickel.

10. A process according to any of claims 1 to 6 characterised in that the material of the balancing members (12) is denser than the balance material (16).

11. A process according to claim 10 characterised in that the balancing members (12) are of nodular iron and the balance material (16) is selected from the group consisting of aluminium and aluminium alloys.

12. A process according to any preceding claim characterised in that the balancing members are counterweigts (12).

13. A crankshaft balanced by a process according to any preceding claim.

FIG. 1

FIG. 2

FIG. 3

FIG. 4

13169